# EUROPEAN PATENT APPLICATION

(11) **EP 0 642 968 A2**
(43) Date of publication of application: **15.03.1995**
(21) Application number: 94306466.7
(22) Date of filing: 02.09.1994
(51) Int. Cl.: B62B 9/14

(54) **Baby carriage hood**

(30) Priority: 14.09.1993 GB 9318977
(71) Applicant: BRITAX-TEUTONIA KINDERWAGENFABRIK GmbH, D-32112 Hiddenhausen (DE)
(72) Inventor: Wachters, Peter, NL-7550 AC Hengelo (NL)
(74) Representative: Hollinghurst, Antony

(57) **Abstract**

A baby carriage hood comprises a flexible cover mounted on a U-shaped frame member (28) which has each end secured to a respective side of the baby carriage body by a respective pivot joint. Each pivot joint (30) comprises a support member (40) adapted to be secured to the baby carriage, a shaft (44) fast with the support member (40), and an annular bracket (54) secured both to the U-shaped frame member (28) and to a locking member (52) connected to the shaft (44) by mutually engaging screw thread formations (46, 48). The bracket (54) and carries an annular wedge-shaped rib (58) arranged to engage in an annular groove (56) in the support member (40). Because of the screw-threaded connection between the shaft (44) and locking member (52), angular movement of the frame member (28) relative to the support member (40) varies the friction between the rib (58) and the groove (56).

## Description

This invention relates to a baby carriage hood of the type comprising a flexible cover mounted on a U-shaped frame member which has each end secured to a respective side of the baby carriage body by a respective pivot joint, each pivot joint comprising a support member adapted to be secured to the baby carriage, a shaft fast with the support member, a bracket secured to the U-shaped frame member and mounted on the shaft so that it is movable angularly and axially thereon and having a clamping surface adapted to engage with a complementary clamping surface on the support member to inhibit relative angular movement, and a locking member having a screw-thread adapted to engage with a complementary screw-thread on the shaft to urge the clamping surfaces into engagement with one another.

A baby carriage hood of this type is disclosed in US-A-4809724. With this hood, it is necessary first to move the frame member to its deployed position and then to tighten the locking member of each pivot joint separately. The present invention provides a hood which can be deployed and clamped in its deployed position with a single movement.

According to the invention, a baby carriage hood of the type described above has coupling means for coupling the bracket to the locking member for simultaneous angular movement so that angular movement of the bracket relative to the support member causes axial movement of the bracket relative to the support member to vary the friction between the clamping surfaces.

An embodiment of the invention will now be described, by way of example, with reference to the accompanying drawings, in which:
Figure 1 is a perspective view of a pushchair fitted with a hood in accordance with the invention;
Figure 2 is a side view of the joint connecting the hood to the pushchair on the left hand side thereof (when viewed from behind);
Figure 3 is a sectional view taken on the line 3-3 in Figure 2; and
Figure 4 is a side view, similar to Figure 2, but with one component removed.

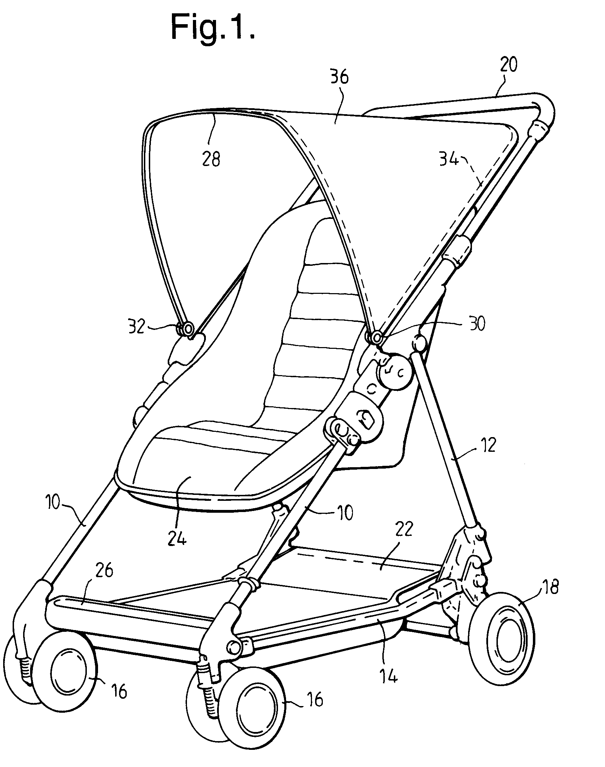

Referring first to Figure 1, a pushchair is formed from two interconnected side frames, each having a respective front frame member 10, a respective rear frame member 12 and a respective bottom frame member 14 joining the bottom ends of the front and rear frame members 10 and 12 and below which front and rear wheels 16 and 18 are mounted. The upper ends of the front and rear frame members 10 and 12 of each side frame are interconnected by respective limbs of a U-shaped handle 20. A luggage tray 22 is mounted between the two bottom frame members 14. The pivotal interconnection between the various frame members described above, and the manner in which they permit the pushchair to be folded, form no part of the present invention and will not be described further.

A seat 24 is mounted between the two side frames adjacent to the positions at which the tops of the frame members 10 and 12 are connected to the handle 20. A footrest 26 extends between the bottom ends of the front frame members 10 just above the level of the luggage tray 22.

A U-shaped front frame member 28 is pivotally mounted on the two limbs of the handle 20 by a pair of pivot joints 30 and 32. A U-shaped rear frame member 34 is also mounted on the pivot joints 30 and 32 but its orientation relative to the handle 20 is fixed. A hood 36 is supported on the frame members 28 and 34.

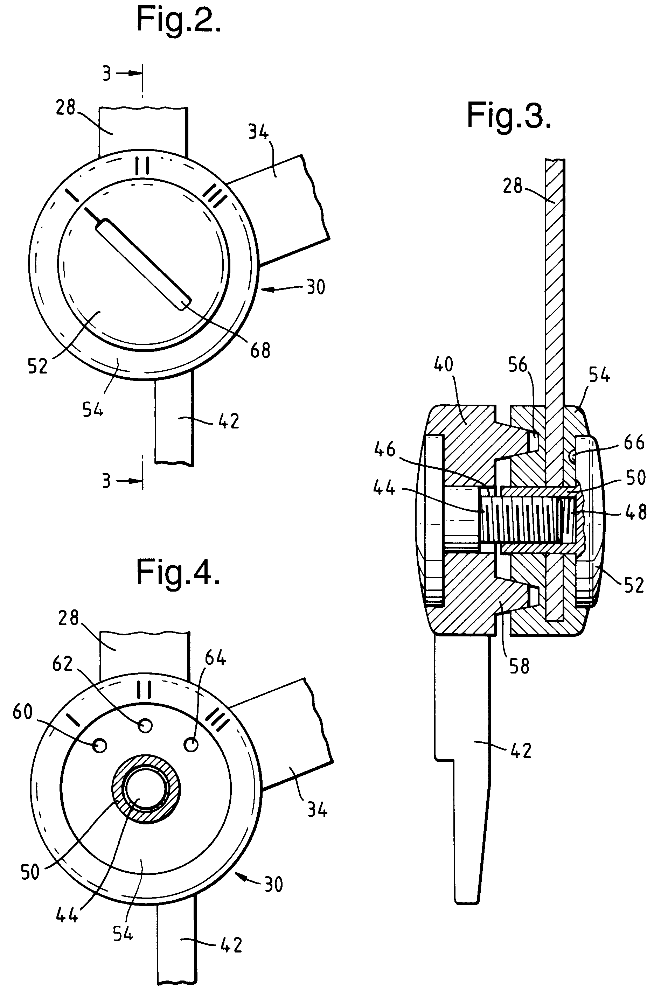

Referring to Figures 2 to 4, the pivot joint 30 on the left hand side of the pushchair has a support member 40 mounted on a spigot 42 which is engageable in a socket (not shown) on the pushchair handle 20 and to which the U-shaped frame member 34 is secured. The support member 40 carries a horizontally projecting shaft 44 having a male screw-threaded formation 46 which engages with a complementary female screw-threaded formation 48 in a bore in a second shaft 50 which is fast with an end cap 52.

An annular bracket 54, which is fast with one end of the U-shaped frame member 28, is journalled on the second shaft 50. In its surface confronting the support member 40, the annular bracket 54 has an annular groove 56, the walls of which taper inwardly. The support member 40 carries a complimentary annular rib 58 of wedge-shaped cross-section which engages in the groove 56.

In its face confronting the cap 52, the annular bracket 54 has three uniformly spaced hemispherical recesses 60, 62 and 64. The cap 52 carries a hemispherical projection 66 which is selectively engageable in one of the recesses 60, 62 and 64 so as to secure the support ring 54 at one of three chosen orientations relative to the shaft 50. The cap 52 is sufficiently resilient to allow the projection 66 to be displaced from one recess to another if the cap 52 is turned by engaging a coin in a slot 68 therein (Figure 2).

The pivot joint 32 is a mirror image of the pivot joint 30.

When the hood 36 is not required to be deployed for use, the frame member 28 is pivoted back on the pivot joints 30 and 32 so as to abut against the frame 34. When the hood is to be deployed to the position shown in Figure 1, the frame member 28 is pivoted forwardly, causing the screw thread 46 to gradually tighten the engagement between the groove 56 and the projection 58, thereby increasing the friction resisting such pivotal movement and tending to hold the frame member 28 in its deployed position. When the frame member 28 is returned to its folded position, in which it abuts against the frame member 34, the screw thread 46 gradually reduced this friction so as to progressively reduce the force resisting this folding movement. The adjustment provided by the projection 66 and the recesses 60, 62 and 64 allows the angular position of onset of the friction resisting such pivotal movement.

It will be appreciated that in order to provide the above described action, the screw thread 46 and the corresponding screw thread of the pivot joint 32 are of opposite sense, the screw thread 46 tightening on angular movement of the annular bracket 54 in the anti-clockwise direction, while the corresponding screw thread for the pivot joint 32 tightening in response to movement in the clockwise direction (as viewed from the respective side of the pushchair).

The invention can also be used to provide a hood for a perambulator.

## Claims

1. A baby carriage hood comprising a flexible cover (36) mounted on a U-shaped frame member (28) which has each end secured to a respective side of the baby carriage body by a respective pivot joint (30, 32), each pivot joint (30, 32) comprising a support member (40) adapted to be secured to the baby carriage, a shaft (44) fast with the support member (40), a bracket (54) secured to the U-shaped frame member (28) and mounted on the shaft (44) so that it is movable angularly and axially thereon and having a clamping surface (56) adapted to engage with a complementary clamping surface (58) on the support member (40) to inhibit relative angular movement, and a locking member (52) having a screw-thread (48) adapted to engage with a complementary screw-thread (46) on the shaft (44) to urge the clamping surfaces (56, 58) into engagement with one another, characterised by coupling means (60-66) for coupling the bracket (54) to the locking member (52) for simultaneous angular movement so that angular movement of the bracket (54) relative to the support member (40) causes axial movement of the bracket (54) relative to the support member (40) to vary the friction between the clamping surfaces (56, 58).

2. A baby carriage hood according to claim 1, wherein one of said clamping surfaces comprises an annular groove (56) with inwardly tapering walls, and the other of said clamping surfaces comprises a complimentary annular rib (58) of wedge-shaped cross-section shaped to engage in the groove.

3. A baby carriage hood according to claim 1 or 2, further comprising means (60, 62, 64) for varying the angular position of the bracket (54) relative to the locking member (52) so as to permit variation of the friction between such bracket (54) and its support member (40) when the frame member (28) is in its fully deployed position.
